# FASCICULE DE BREVET EUROPEEN

(11) **EP 0 611 525 B1**
(45) Date de publication et mention de la délivrance du brevet: **19.03.1997**
(21) Numéro de dépôt: 93420484.3
(22) Date de dépôt: 07.12.1993
(51) Int. Cl.: A23C 9/154, A23C 11/04, A23C 9/20

(54) **Procédé pour la fabrication d'un lait infantile liquide prêt à l'emploi, longue conservation et anti-régurgitation, et lait ainsi obtenu**
Verfahren zur Herstellung einer flüssigen gebrauchsfertigen Kindermilch mit langer Haltbarkeit und Anti-Regurgitationseigenschaft derart hergestellter Milch
Process for preparing a liquid ready to use infant milk with long conservation and anti-regurgitation properties and milk thereby obtained

(30) Priorité: 17.12.1992 FR 9215570
(43) Date de publication de la demande: 24.08.1994
(73) Titulaire: COMPAGNIE EUROPEENNE DE DIFFUSION DE PRODUITS LACTES - CEDILAC SA, 69286 Lyon (FR)
(72) Inventeur: Balabaud, Christine, F-94550 Chevilly La Rue (FR); Loones, Alain, F-94350 Villiers Sur Marne (FR)
(74) Mandataire: Laurent, Michel

(56) Documents cités:
- EP-A- 0 419 885
- FR-A- 2 416 651
- FR-A- 2 516 355
- FR-M- 3 789
- GB-A- 2 110 517
- US-A- 2 871 123
- US-A- 3 174 866
- US-A- 4 303 692
- PATENT ABSTRACTS OF JAPAN vol. 008, no. 019 (C-207)26 Janvier 1984 & JP-A-58 187 133 (MEIJI NIYUUGIYOU KK) 1 Novembre 1983

## Description

L'invention concerne un procédé pour la fabrication d'un lait infantile, liquide notamment, longue conservation et anti-régurgitation; elle se rapporte également au lait ainsi obtenu.

Pour l'alimentation des nourissons, on utilise du lait dit infantile, qui le plus généralement, se présente sous forme de poudre que l'on dissout dans de l'eau préalablement chauffée.

Comme on le sait, les nourrissons sont fréquemment sujets à de simples régurgitations de faible abondance, survenant souvent après les repas ou lors de phénomènes d'erructations. Ces régurgitations sont sans conséquences sur le développement de l'enfant et relèvent surtout de l'inconfort. Plus rarement, existent de véritables reflux gastro-oesophagiens liés à des erreurs anatomiques et qui peuvent avoir des conséquences oesophagiennes et respiratoires. Devant ce problème, les mères consultent le médecin de l'enfant (souvent un pédiatre) qui est généralement amené à prescrire des spécialités médicales, vendues en pharmacie, qui contiennent des agents épaississants, tels que pectine, caroube, carboxyméthylcellulose ... . La spécialité sous forme de poudre est ajoutée au lait infantile, préalablement chauffé au bain-marie ou au four à micro-ondes. L'ensemble doit être ajouté, puis laissé au repos plusieurs minutes jusqu'à l'épaississement. Bien que très largement utilisée depuis plusieurs décennies, cette technique n'est pas satisfaisante car, d'une part, le dosage de l'ajout est toujours délicat et souvent imprécis, et d'autre part, elle est longue et nécessite un moyen de chauffage, et enfin il se forme souvent des grumeaux qui bouchent les tétines. Par ailleurs, la texture du produit reconstitué évolue dans le temps et oblige une consommation immédiate de la préparation.

Ces agents épaississants agissent au contact de l'acidité de l'estomac en épaississant le bol alimentaire, ce qui permet ainsi d'éviter les reflux par effet de pesanteur. L'usage de préparations épaississantes est préconisé en première intention devant les régurgitations simples. Les thérapeutiques médicamenteuses sont plutôt réservées aux régurgitations récalcitrantes et surtout aux vrais reflux.

Par ailleurs, il est bien connu de fabriquer du lait de longue conservation par un procédé dénommé "UHT" (Ultra Haute Température). Ce procédé étant bien connu e.g. FR-A-2516355, il est inutile de le décrire ici en détail. Pour l'essentiel, ce procédé largement industrialisé, consiste :
. à préchauffer un lait, standardisé ou autre, par exemple à 70-75° C ;
. à homogénéiser ce lait préchauffé par laminage sous forte pression (plus de 1,7. 10⁷ Pascals) pour éclater les globules gras et éviter ainsi la montée de la crème ;
. puis, à stériliser par un choc thermique à 130-145° C pendant deux à dix secondes ;
. enfin, après refroidissement, à conditionner sous atmosphère aseptique et en emballages stériles.

Mais comme on le sait, ce lait UHT n'est pas adapté aux besoins spécifiques des nourrissons, même après ajout d'agents épaississants.

L'invention pallie ces inconvénients. Elle vise un procédé pour fabriquer du lait infantile, longue conservation, prêt à l'emploi, qui atténue, voire même supprime les risques de régurgitation.

Ce procédé pour la fabrication d'un lait infantile longue conservation, prêt à l'emploi et anti-régurgitation, qui consiste :
. à préchauffer, puis à homogénéiser un lait infantile,
. puis, à traiter ce lait à ultra haute température (UHT),
. enfin, à conditionner sous atmosphère aseptique en emballages stériles,
se caractérise en ce que juste avant l'étape d'homogénéisation, on introduit dans le lait de 0,3 à 1 %, calculé en poids du lait stérile emballé, d'un agent épaississant choisi dans le groupe comprenant la caroube, la guar, les carraghénanes et les pectines, seuls ou en mélange entre eux.

En d'autres termes, l'invention consiste dans une étape spécifique du procédé UHT, à savoir juste avant l'étape d'homogénéisation, et de préférence avant la phase de préchauffage qui précède l'homogénéisation, à introduire dans le lait un agent épaississant spécifique, et en quantités précises, à savoir comprise entre 0,3 et 1 %. On ne pouvait pas imaginer que cette simple sélection permette de résoudre avec succès un problème qui se pose depuis longtemps, à savoir la fabrication d'un lait infantile de longue conservation prêt à l'emploi et anti-régurgitation.

Avantageusement, l'agent épaississant est de la caroube, qui donne les meilleurs résultats.

Comme on le sait, la caroube largement utilisée dans l'industrie alimentaire, est l'endosperme de la graine de caroubier. Ce produit, bien connu pour ses propriétés épaississantes, est largement décrit dans la littérature. Comme déjà dit, il importe que la quantité introduite, calculée par rapport au poids de lait stérile emballé, soit comprise entre 0,3 et 1 %. On a observé que si cette proportion est inférieure à 0,3 %, on obtient un effet épaississant insuffisant. De même, si cette proportion excède 1 %, on a un produit pris en gel impropre à la consommation des nourrissons. On obtient de bons résultats avec une quantité comprise entre 0,5 et 0,8 %.

En pratique, cet agent épaississant peut être introduit sous deux formes :
- d'une part, sous forme pulvérulente directement dans le lait infantile ;
- d'autre part, préalablement dissout dans de l'eau distillée, ou le plus généralement dans de l'eau adoucie, à température ambiante, sous agitation très rapide (1000 tours/minute et plus), et est conservée sous agitation (100 tours/minute et plus) avant d'être envoyée dans le circuit ;il est indispensable que ce produit épaississant soit maintenu sous agitation.

Comme déjà dit, la caroube donne les meilleurs résultats. Celle-ci peut être substituée par la guar.

Avantageusement, en pratique :
- on introduit la caroube à température ambiante et sous forte agitation (plus de 1 000 tours/minute) sous forme pulvérulente à raison de 0,5 à 0,8 % de farine de graine de caroube, ou sous forme de solution aqueuse contenant de 10 à 35 grammes/litre de caroube ;
- la solution aqueuse de caroube est agitée en permanence avant d'être envoyée en amont du préchauffage et de l'homogénéisation ;
- l'agent épaississant peut être formé par un mélange, en quantité appropriée, de guar et de pectines ;
- on ajoute également à la solution de lait à homogénéiser une solution de vitamines d'usage courant dans l'industrie laitière.

On ne pouvait pas imaginer que grâce à l'utilisation de cet agent épaississant bien connu, utilisé dans des conditions bien spécifiques et en quantités précises, à savoir juste avant l'étape de préchauffage qui précède l'homogénéisateur, on pourrait ainsi préparer un lait infantile de longue conservation prêt à l'emploi et anti-régurgitation, ce que l'on ne savait pas obtenir jusqu'alors.

Si le plus généralement, le lait infantile caractéristique est liquide, il peut également être transformé en poudre par des techniques classiques, telles que notamment par atomisation.

La manière dont l'invention peut être réalisée et les avantages qui en découlent ressortiront mieux des exemples de réalisation qui suivent.

### Exemple 1:

Dans une cuve en acier inoxydable, on introduit à température ambiante quatre vingt (80) kilogrammes (kg) d'un lait infantile liquide.

Indépendamment, dans une cuve, on prépare à température ambiante une solution à 3 % de caroube dans de l'eau adoucie.

La caroube est introduite sous forte agitation (turbine, pompe centrifuge) dans de l'eau adoucie (1 000 tours/minute et plus).

On obtient alors une solution de couleur translucide, de viscosité 48 Pascals.seconde, que l'on conserve à température ambiante sous agitation, du fait de sa forte viscosité.

On envoie alors cette solution mère de caroube par une pompe positive dans le lait infantile à raison de vingt (20) kilogrammes contenant 0,60 kilogramme de caroube; on agite à 1 000 tours/minute pendant 300 secondes en recirculation. Il est également possible d'incorporer directement la farine de graines de caroube au lait infantile. La solution obtenue présente une viscosité de 0,1 Pascal.seconde . On préchauffe à 72° C, puis on homogénéise à 1,7.10⁷ Pascals.

On effectue ensuite le traitement UHT pendant deux secondes à 140° C.

Après refroidissement à 20° C, on conditionne sous atmosphère stérile.

On obtient un lait liquide longue conservation, stérile, qui à 20° C présente une viscosité voisine de 1,5 Pascal.seconde (contre une viscosité de 0,1 Pascal.seconde pour le lait de départ), présentant toutes les propriétés inhérentes au procédé UHT.

En outre, les essais cliniques montrent que ce lait présente d'excellentes propriétés anti-régurgitation et convient donc parfaitement pour l'alimentation des nourrissons.

### Exemple 2:

On répète l'exemple 1 en ajoutant à la solution de lait contenant la caroube, juste avant le préchauffage qui précède l'homogénéisation, une solution aqueuse contenant 0,1 gramme/litre d'un mélange de vitamines, ce qui est d'usage courant dans l'industrie laitière, notamment pour l'alimentation des nourrissons, à savoir vitamines C, B6, B1, etc ...

Les laits infantiles préparés conformément à l'invention présentent de nombreux avantages par rapport aux laits infantiles actuellement utilisés. On peut citer :
- le fait qu'il se présente sous forme liquide prêt à être réchauffé, facile à boire par les enfants, et présentant une très bonne texture lisse ;
- une longue conservation avec de bonnes propriétés d'homogénéité dans le temps et de stabilité, puisque après neuf mois de stockage dans les conditions habituelles, on n'a observé aucune dégradation significative ;
- une facilité d'emploi pour l'utilisatrice, puisqu'il n'y a plus d'erreur de dosage, de grumeaux, et qu'il est prêt à l'emploi ;
- une très bonne propriété anti-régurgitation, donc une très bonne sécurité et commodité pour l'utilisatrice et un gain de temps.

## Revendications

1. Procédé pour la fabrication d'un lait infantile, longue conservation et anti-régurgitation, qui consiste :
. à préchauffer, puis à homogénéiser un lait infantile,
. puis, à traiter ce lait à ultra haute température (UHT),
. enfin, à conditionner sous atmosphère aseptique en emballages stériles,
**caractérisé** en ce que, avant l'étape d'homogénéisation, on introduit dans le lait de 0,3 à 1 %, calculé sur le poids du lait stérile emballé, d'un agent épaississant choisi dans le groupe comprenant la caroube, la guar, les carraghénanes et les pectines, seuls ou en mélange entre eux.

2. Procédé selon la revendication 1, caractérisé en ce que l'agent épaississant introduit est de la caroube.

3. Procédé selon la revendication 2, caractérisé en ce qu'on introduit la caroube à température ambiante et sous forte agitation (plus de 1 000 tours/minute) sous forme d'une solution aqueuse contenant de 10 à 35 grammes/litre de caroube.

4. Procédé selon la revendication 2, caractérisé en ce que l'on introduit la caroube sous forme de poudre à raison de 5 à 8 grammes/litre de lait infantile.

5. Procédé selon la revendicaton 2, caractérisé en ce que la solution aqueuse de caroube est agitée en permanence avant d'être envoyée en amont de l'homogénéisateur.

6. Procédé selon l'une des revendications 2 à 5, caractérisé en ce que la caroube est prélablement dissoute à température ambiante dans de l'eau adoucie, sous une agitation d'au moins 1000 tours/minute.

7. Procédé selon la revendication 1, caractérisé en ce que l'on introduit de 0,5 à 0,8 % de caroube.

8. Procédé selon l'une des revendications 2 à 6, caractérisé en ce que on introduit la caroube juste avant l'étape de préchauffage qui précède l'homogénéisation.

9. Lait infantile longue conservation et anti-régurgitation, obtenu par la mise en oeuvre du procédé selon l'une des revendications 1 à 8.

10. Lait infantile selon la revendication 9, caractérisé en ce qu'il se présente sous forme liquide.

## Claims

1. Process for the manufacture of a longlife, and anti-regurgitation infant milk, which consists:
. in preheating, then homogenizing an infant milk,
. then, in treating this milk at ultra high temperature (UHT),
. finally, in packaging under aseptic atmosphere in sterile packages,
characterized in that before the homogenization stage, there is introduced into the milk from 0.3 to 1%, calculated by weight of the packaged sterile milk, a thickening agent chosen from the group comprising carob, guar, carrageenans and pectins, alone or mixed with each other.

2. Process according to claim 1, characterized in that the thickening agent introduced is carob.

3. Process according to claim 2, characterized in that the carob is introduced at room temperature and with vigorous stirring (more than 1000 revolutions/minute) in the form of an aqueous solution containing 10 to 35 grams/liter of carob.

4. Process according to claim 2, characterized in that the carob is introduced in powdered form in an amount of 5 to 8 grams/liter of infant milk.

5. Process according to claim 2, characterized in that the aqueous carob solution is stirred continuously before being sent upstream to the homogenizer.

6. Process according to one of claims 2 to 5, characterized in that the carob is previously dissolved at room temperature in deionised water, with a stirring rate of at least 1000 revolutions/minute.

7. Process according to claim 1, characterized in that 0.5 to 0.8% carob is introduced.

8. Process according to one of claims 2 to 6, characterized in that the carob is introduced just before the preheating stage which precedes the homogenization.

9. Longlife and anti-regurgitation infant milk, obtained by the implementation of the process according to one of claims 1 to 8.

10. Infant milk according to claim 9, characterized in that it is provided in liquid form.

## Patentansprüche

1. Verfahren zur Herstellung einer Säuglingsmilch mit langer Haltbarkeit und Anti-Regurgitationseigenschaft, bestehend aus:
. Vorwärmen, danach Homogenisieren der Säuglingsmilch
. danach Behandlung dieser Milch durch Ultrahocherhitzen (UHT)
. schließlich Konditionieren unter einer aseptischen Atmosphäre in sterile Verpackungen,
dadurch gekennzeichnet, daß vor dem Homogenisierungsschritt 0,3 bis 1 % eines Verdickungsmittels, bezogen auf das Gewicht der sterilen, abgepackten Milch, in die Milch eingebracht wird, wobei das Verdickungsmittel ausgewählt ist aus der Gruppe bestehend aus Johannisbrot, Guar, den Carragheenanen und den Pektinen, und zwar einzeln oder Mischungen davon.

2. Verfahren nach Anspruch 1, dadurch gekennzeichnet, daß das eingebrachte Verdickungsmittel Johannisbrot ist.

3. Verfahren nach Anspruch 2, dadurch gekennzeichnet, daß das Johannisbrot bei Raumtemperatur und unter starker Bewegung (mehr als 1000 upm) in Form einer wäßrigen Lösung eingebracht wird, die von 10 bis 35 Gramm/Liter Johannisbrot enthält.

4. Verfahren nach Anspruch 2, dadurch gekennzeichnet, daß das Johannisbrot in Form eines Pulvers in einer Konzentration von 5 bis 8 Gramm/Liter der Säuglingsmilch eingebracht wird.

5. Verfahren nach Anspruch 2, dadurch gekennzeichnet, daß die wäßrige Johannisbrotlösung permanent bewegt wird, bevor sie stromaufwärts eines Homogenisators gebracht wird.

6. Verfahren nach einem der Ansprüche 2 bis 5, dadurch gekennzeichnet, daß das Johannisbrot zunächst bei Raumtemperatur in enthärtetem Wasser unter Rühren mit wenigstens 1000 upm gelöst wird.

7. Verfahren nach Anspruch 1, dadurch gekennzeichnet, daß 0,5 bis 0,8 % Johannisbrot eingebracht werden.

8. Verfahren nach einem der Ansprüche 2 bis 6, dadurch gekennzeichnet, daß das Johannisbrot gerade vor dem Vorwärmschritt, der dem Homogenisieren vorausgeht, eingebracht wird.

9. Säuglingsmilch mit langer Haltbarkeit und Anti-Regurgitationseigenschaft, erhalten durch Durchführen des Verfahrens nach einem der Ansprüche 1 bis 8.

10. Säuglingsmilch nach Anspruch 9, dadurch gekennzeichnet, daß sie in flüssiger Form vorliegt.
